# EUROPEAN PATENT APPLICATION

(11) **EP 4 723 807 A1**
(43) Date of publication of application: **08.04.2026**
(21) Application number: 24204915.3
(22) Date of filing: 07.10.2024
(51) Int. Cl.: H05B 47/125

(54) **INTELLIGENT DYNAMIC LIGHTING SYSTEM**

(71) Applicant: ZG Lighting (UK) Limited, Chalfont St Peter Buckinghamshire SL9 9FG (GB); Zumtobel Lighting GmbH, 6850 Dornbirn (AT)
(72) Inventor: HARIDY, Hossam, 6851 Dornbirn (AT); GOWICK, Roland, 6851 Dornbirn (AT)
(74) Representative: Rupp, Christian

(57) **Abstract**

The present invention provides a lighting control system. Said lighting control system (10) comprises: a camera-based sensor (11), including a processing unit within its casing, wherein the processing unit is configured to process image data captured by the sensor (11) and extract non-graphic feature information (12), wherein the extract feature information (12) indicates at least one characteristic related to the presence, nature, and/or movement of human persons detected by the sensor (11). Said system (10) further comprises an API (13) configured to receive the extracted feature information (12) from the sensor (11) and provide control information (14) to a lighting control unit (15) responsible for one or more luminaires (16), and the lighting control unit (15) configured to control the operation of one or more luminaires (16) based on the control information (14) provided by the API (13).

## Description

### TECHNICAL FIELD

The present invention relates to lighting control, more specifically to dynamic lighting systems that adjust lighting parameters in real-time. These systems are designed for various environments, particularly retail and fashion stores, where customized lighting can enhance the customer experience and promote targeted product visibility based on real-time detection of human characteristics.

### BACKGROUND

Current smart lighting solutions in the market primarily focus on basic automation, such as adjusting lighting based on ambient light levels or time of day. More advanced systems may incorporate motion sensors to detect occupancy, turn lights on or off, or adjust brightness accordingly. In retail environments, lighting is frequently used to enhance product visibility or create a specific ambiance, but these systems often rely on static programming or require manual control for customization.

However, these existing solutions are limited in their ability to make dynamic adjustments based on the real-time presence of individuals with varying characteristics. They generally operate using pre-set programs and lack the flexibility to adapt lighting conditions to the demographic attributes of those in the environment, such as age or gender. As a result, current systems fall short in providing tailored lighting that could maximize the presentation and appeal of products, particularly in retail settings where product display is crucial to influencing customer purchasing decisions.

### SUMMARY

In view of the above-discussed limitations, the objective of this invention is to provide a smart lighting control system capable of dynamic, real-time adjustments. Such a system can be used for enhancing visibility and appeal in various environments, such as product visibility and appeal in retail environments. An additional objective of this invention is to address the absence of context-aware lighting systems that can automatically tailor lighting conditions to the specific needs of the people present, improving user experience and interaction with the space. This system is particularly valuable in settings where lighting customization can significantly influence the presentation of products or ambiance, though it is not limited to such environments.

These and other objectives are achieved by the solution of this disclosure as described in the independent claims. Advantageous implementations are further defined in the dependent claims.

According to a first aspect of the invention, a lighting control system is provided. The system includes a camera-based sensor equipped with a processing unit within its casing, configured to process image data and extract non-graphic feature information. This feature information indicates at least one characteristic related to the presence, nature, and/or movement of human persons detected by the sensor.

The system further comprises an application programming interface (API) that receives the extracted feature information from the sensor and provides control information to a lighting control unit. The lighting control unit then adjusts the operation of one or more luminaires based on the control information received from the API.

Advantageously, the system allows for dynamic control of lighting based on real-time detection of human presence, movement, and behavior, offering multiple benefits across various environments such as retail, office, and residential settings. By continuously processing non-graphic feature information through the camera-based sensor, the system can intelligently adjust lighting parameters without manual intervention, thereby enhancing user experience and improving the ambiance of the space in response to actual human activity.

According to an implementation form of the first aspect of the invention, the API and the lighting control unit are configured to adjust at least one lighting parameter of the one or more luminaires based on the feature information extracted by the sensor.

This configuration allows for automatic adaptation of lighting based on the real-time detection of human activity, improving convenience, energy savings, and user comfort. Advantageously, by dynamically adjusting parameters such as brightness or color, the system provides optimized lighting conditions without manual input.

According to an implementation form of the first aspect of the invention, the at least one lighting parameter comprises one or more of intensity, color, color temperature, scene settings, and the angle of a lighting cone.

By enabling control over multiple lighting parameters, the system offers versatility and precision in lighting adjustments. This flexibility improves ambiance and lighting quality, catering to specific scenarios like work, relaxation, or entertainment, while maintaining energy efficiency through targeted lighting control. This is particularly useful in environments like retail stores, where lighting can be adjusted to enhance the presentation of products or create specific moods to influence customer behavior. For instance, the system can spotlight certain areas or adjust the color temperature to make products more visually appealing to the demographic detected by the sensor.

According to a further implementation form of the first aspect of the invention, the lighting control system is configured to dynamically adjust the at least one lighting parameter in real-time based on updates to the feature information from the sensor.

Advantageously, the ability to dynamically adjust lighting in real-time provides an intelligent and responsive lighting solution. As human movement or presence changes, the system can continuously adapt, ensuring optimal lighting conditions at all times. This not only enhances user experience but also reduces unnecessary energy consumption by automatically dimming or turning off lights when no one is present.

According to a further implementation form of the first aspect of the invention, the API is further configured to communicate with a software unit for processing the non-graphic feature information, wherein the software unit is hosted on a remote platform located in a local server or a cloud-based environment.

This cloud-enabled configuration allows for scalable processing and enhanced computational capabilities. By leveraging remote platforms, the system can perform more complex data analysis and machine learning to improve lighting control. This setup also allows for centralized control and updates, offering improved system maintenance and flexibility across various installations.

According to a further implementation form of the first aspect of the invention, communication between the camera-based sensor, the API, and the lighting control unit is performed using an IP-based network protocol.

The use of an IP-based network protocol for communication ensures compatibility with modern networking infrastructure and allows for easy integration into existing systems. This provides enhanced connectivity, remote control, and monitoring capabilities, facilitating smart building applications and enabling secure, scalable deployment in different environments.

According to a second aspect of the invention, a method for controlling luminaires is provided. Said method comprises: a step of extracting non-graphic feature information from a camera-based sensor, wherein the feature information indicates at least one characteristic related to the presence, nature, and/or movement of human persons detected by the sensor. Said method further comprises a step of transmitting the extracted feature information to an API, and a step of using the API to provide control information to a lighting control unit, wherein the lighting control unit controls the operation of one or more luminaires based on the received control information.

This method offers an intelligent and automated approach to lighting control by leveraging camera-based sensors to detect human presence and behavior. By extracting non-graphic data, such as motion or occupancy, and transmitting it through an API, the system enables real-time adjustments to the lighting environment. This results in significant energy savings, as lights can be adjusted based on occupancy, reducing waste when spaces are unoccupied. Moreover, the method enhances user comfort by ensuring lighting conditions are continuously optimized for the detected activity, creating dynamic lighting environments tailored to human needs. The transmission via the API further allows seamless integration with various lighting control systems, making it adaptable to different installation environments.

Implementation forms of the method of the second aspect may correspond to the implementation forms of the lighting control system of the first aspect described above. The method of the second aspect and its implementation forms achieve the same advantages and effects as described above for the lighting control system of the first aspect and its implementation forms.

According to a third aspect of the invention, an API is provided. Said API is configured to support the method of the second aspect.

This API serves as a critical intermediary that enables communication between the sensor system and the lighting control unit. By being specifically designed to support the method of processing non-graphic feature information, the API ensures efficient data flow and reliable control of the luminaires. The flexibility of the API allows it to integrate with a range of lighting control units and systems, facilitating interoperability across different hardware setups. This standardization also simplifies the process of upgrading or scaling the system, making it easier to implement in large or complex lighting networks. Additionally, the API can facilitate real-time updates, allowing for continuous and responsive lighting adjustments based on live data, thus enhancing the overall system's functionality and efficiency.

Implementation forms of the method of the third aspect may correspond to the implementation forms of the emergency driver of the first aspect described above. The method of the third aspect and its implementation forms achieve the same advantages and effects as described above for the emergency driver of the first aspect and its implementation forms.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary lighting control system according to an embodiment of this invention; and
- Fig. 2: shows a method according to an embodiment of this invention.

### DETAILED DESCRIPTION OF EMBODIMENTS

Illustrative embodiments of a lighting control system, a method, and an API are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

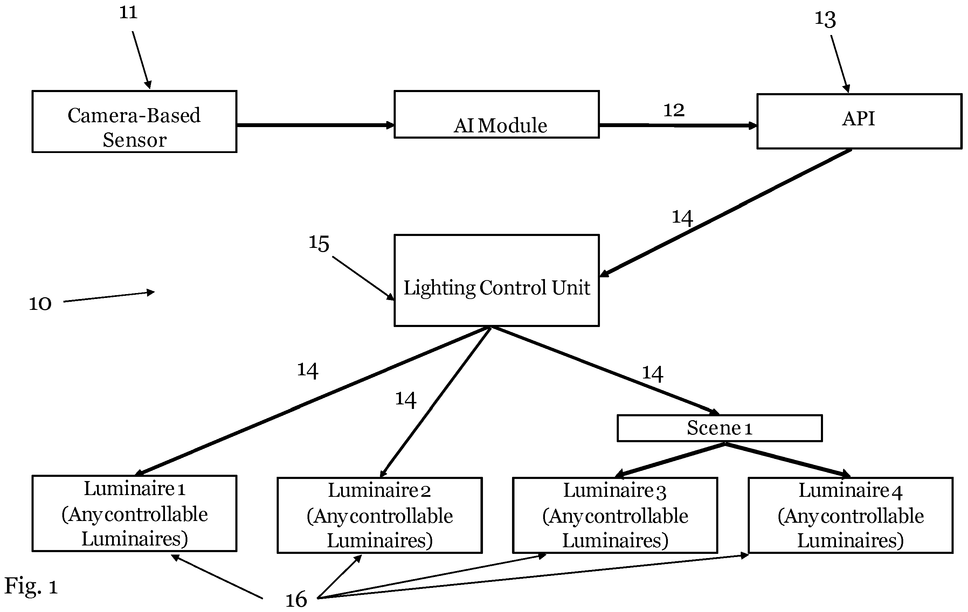

With respect to Fig. 1, an exemplary embodiment of a lighting control system 10 is illustrated.

The system 10 comprises a camera-based sensor 11 integrated with a processing unit (represented as "AI Module" in the figure) within its casing. The processing unit is configured to extract non-graphic feature information 12 from the captured image data, which indicates at least one characteristic related to the presence, nature, and/or movement of human persons detected by the sensor. This feature information 12 is transmitted to an API 13, which facilitates communication between the sensor and the lighting control unit 15.

The lighting control unit 15 is configured to control the operation of one or more luminaires 16 based on the control information 14 provided by the API 13.

In one implementation, the API 13 and the lighting control unit 15 are configured to adjust at least one lighting parameter of the one or more luminaires 16 based on the feature information 12 extracted by the sensor 11.

This adjustment may include parameters such as lighting intensity, color, color temperature, scene, or the angle of the lighting cone, enabling dynamic and real-time control over the lighting conditions in the environment.

Namely, the lighting control unit 15 may be further configured to dynamically adjust the at least one lighting parameter in real-time based on updates to the feature information 12 from the sensor 11.

In accordance with the exemplary embodiment, the API 13 may communicate with a remote software unit hosted on a local server or cloud-based platform to handle more advanced processing of the feature information 12. Optionally, the communication between the system components is performed using an IP-based network protocol, ensuring compatibility with modern networking infrastructures.

The API 13 in this system serves a critical role in enabling communication between the camera-based sensor 11 and the lighting control unit 15. Specifically designed to support the method of extracting and processing non-graphic feature information 12, the API ensures reliable and efficient data flow.

The flexibility of the API allows it to integrate with various lighting control units and systems, facilitating interoperability across different hardware setups. This standardization also simplifies the process of upgrading or scaling the system, making it easier to implement in larger or more complex lighting networks, such as those found in retail environments or commercial buildings.

Additionally, the API 13 enables real-time updates, allowing the system to make continuous and responsive lighting adjustments based on live data. This capability enhances the overall functionality and efficiency of the system by providing precise control over lighting parameters, such as intensity, color, and spotlighting, in response to human activity.

Preferably, the control information 14 may be carried in a control signal, such as a DALI (Digital Addressable Lighting Interface) control signal.

DALI is a widely adopted protocol for communication between lighting devices and control systems. It provides a standardized method for controlling lighting equipment and managing lighting parameters, such as intensity, color, and color temperature. By using a DALI control signal, the system can reliably transmit the control information 14 from the API 13 to the lighting control unit 15.

The DALI protocol allows for precise, bidirectional communication, enabling the API to send detailed control commands and, if necessary, receive feedback from the lighting control unit. This feedback loop ensures that the system can monitor the state of the luminaires 16 and adjust the control information 14 dynamically to maintain optimal lighting conditions in real time.

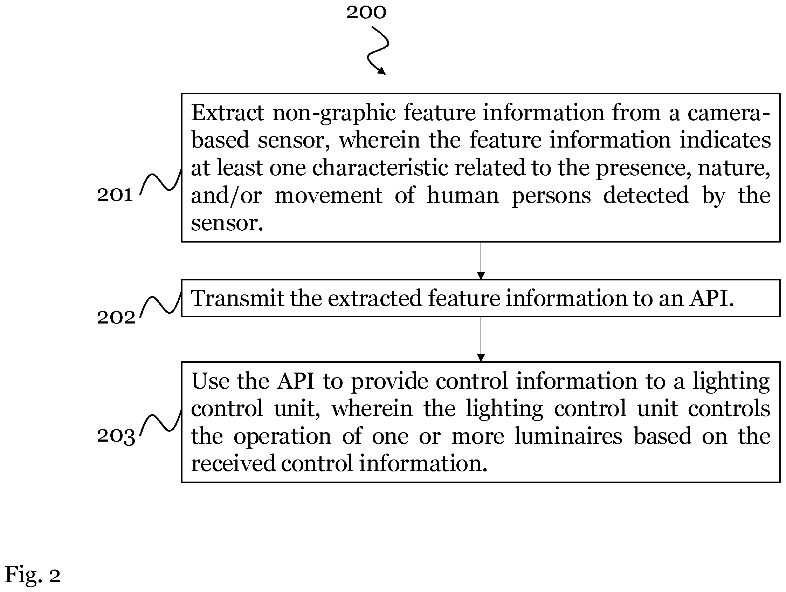

With reference to Fig. 2, an embodiment of a method 200 for controlling luminaires is illustrated.

The method 200 involves three main steps:
Step 201: Extracting Non-Graphic Feature Information
   The camera-based sensor 11 detects the presence, nature, and movement of human persons within the environment and extracts non-graphic feature information related to these characteristics.
Step 202: Transmitting Feature Information
   The extracted feature information is transmitted to the API 13 for further processing.
Step 203: Providing Control Information

The API 13 processes the feature information 12 and sends control information 14 to the lighting control unit 15, which adjusts the operation of one or more luminaires 16 based on the received data. The adjustments occur in real-time, responding dynamically to changes in the detected human activity.

This method allows for real-time, dynamic adjustments of lighting conditions based on live data from the sensor system. The API serves as an intermediary that ensures efficient data flow between the sensor and the lighting control system, making it possible to continuously tailor the lighting environment according to the specific demographic or behavioral profile of individuals present in the space.

This invention proposes an Intelligent Dynamic Lighting System, which provides a solution to a significant challenge in retail environments: creating optimized lighting conditions that enhance product visibility and customer engagement. By using the camera-based sensor 11 and AI-integrated processing, the system can analyze demographic characteristics, such as gender or age, and dynamically adjust the lighting accordingly.

For example, if a majority of shoppers in a specific area of a store are detected to be of a certain demographic, the system may adjust the color temperature or spotlighting to emphasize products that are more likely to appeal to that group. These customized lighting effects are enabled through the control information provided by the API, ensuring that the lighting conditions remain tailored to the specific needs of the retail environment.

Based on the proposed solution, lighting conditions can be adapted to the demographic attributes of shoppers, creating a more engaging and personalized shopping environment that resonates with customers. By spotlighting specific products and adjusting lighting parameters such as color temperature, the system enhances the attractiveness and visibility of products, potentially influencing purchase decisions.

Advantageously, the system eliminates the need for manual lighting adjustments, offering dynamic, real-time control based on live data from the retail space. The system also enables the optimization of energy usage by adjusting lighting based on occupancy and the specific needs of the environment, reducing unnecessary power consumption when areas are unoccupied.

Moreover, the API-driven architecture allows for seamless integration into existing lighting networks and easy scalability for larger retail spaces. For instance, this invention allows the use of custom software running on a Raspberry Pi to interpret AI-processed data and send commands via an API, which enables a cost-effective, flexible, and scalable control system for lighting adjustments.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A lighting control system (10) comprising:
a camera-based sensor (11), including a processing unit within its casing, wherein the processing unit is configured to process image data captured by the sensor (11) and extract non-graphic feature information (12), wherein the extract feature information (12) indicates at least one characteristic related to the presence, nature, and/or movement of human persons detected by the sensor (11),
an application programming interface, API (13), configured to receive the extracted feature information (12) from the sensor (11) and provide control information (14) to a lighting control unit (15) responsible for one or more luminaires (16), and
the lighting control unit (15) configured to control the operation of one or more luminaires (16) based on the control information (14) provided by the API (13).

2. The lighting control system (10) of claim 1, wherein the API (13) and the lighting control unit (15) are configured to adjust at least one lighting parameter of the one or more luminaires (16) based on the feature information (12) extracted by the sensor (11).

3. The lighting control system (10) of claim 2, wherein the at least one lighting parameter comprises one or more of:
- intensity,
- color,
- color temperature,
- scene, and
- angle of a lighting cone.

4. The lighting control system (10) of claims 2 or 3, wherein the lighting control unit (15) is configured to dynamically adjust the at least one lighting parameter in real-time based on updates to the feature information (12) from the sensor (11).

5. The lighting control system (10) of any preceding claims, wherein the API (13) is further configured to communicate with a software unit for processing the non-graphic feature information (12), wherein the software unit is hosted on a remote platform located in a local server or a cloud-based environment.

6. The lighting control system (10) of any preceding claims, wherein communication between the camera-based sensor (11), the API (13), and the lighting control system (15) is performed using an IP-based network protocol.

7. A method (200) for controlling luminaires, comprising:
extracting (201) non-graphic feature information from a camera-based sensor, wherein the feature information indicates at least one characteristic related to the presence, nature, and/or movement of human persons detected by the sensor,
transmitting (202) the extracted feature information to an application programming interface, API, and
using (203) the API to provide control information to a lighting control unit, wherein the lighting control unit controls the operation of one or more luminaires based on the received control information.

8. An application programming interface, API, configured to support the method (200) described in claim 7.
